# EUROPÄISCHE PATENTANMELDUNG

(11) **EP 2 335 850 A1**
(43) Veröffentlichungstag der Anmeldung: **22.06.2011**
(21) Anmeldenummer: 10193236.6
(22) Anmeldetag: 01.12.2010
(51) Int. Cl.: B23B 49/02, B23Q 11/10

(54) **Bohrhilfe mit einer Auffangeinrichtung für eine Flüssigkeit**

(30) Priorität: 16.12.2009 DE 102009054779
(71) Anmelder: HILTI Aktiengesellschaft, 9494 Schaan (LI)
(72) Erfinder: Günther, Joachim, 86916, Kaufering (DE); Melzer, Lars, 86978, Hohenfurch (DE)

(57) **Zusammenfassung**

Bohrhilfe (1) mit einer Befestigungseinrichtung (2) zur Befestigung der Bohrhilfe (1) an einem zu bearbeitenden Untergrund (5), einer Führungseinrichtung (3) zur Führung eines Bohrwerkzeuges (11) entlang einer Bohrrichtung (14) und einer Auffangeinrichtung (4) zum Auffangen und Speichern einer Schmutzflüssigkeit, wobei das Bohrwerkzeug (11) bei der Führung entlang der Bohrrichtung (14) von der Auffangeinrichtung (4) zumindest teilweise umgeben ist.

## Beschreibung

Die vorliegende Erfindung betrifft eine Bohrhilfe mit den Merkmalen gemäß dem Oberbegriff des Anspruchs 1.

Bei der abrasiv abtragenden Bearbeitung mit Diamantwerkzeugen, beispielsweise in Form von Diamantbohrkronen, ist es erforderlich, das Diamantwerkzeug im Bereich der Bearbeitungsstelle zu kühlen, um eine Beschädigung des Diamantwerkzeuges durch eine Überhitzung zu vermeiden. Die Schneidsegmente des Diamantwerkzeuges werden während des Bearbeitungsvorgangs mittels einer Kühlflüssigkeit gekühlt, um den Bearbeitungsvorgang zu unterstützen und die Lebensdauer der Schneidsegmente zu erhöhen. Die Flüssigkeit dient außerdem dazu, die von dem Diamantwerkzeug abgetragenen Feststoffe von der Bearbeitungsstelle zu entfernen. Die zugeführte Flüssigkeit wird als Kühl- und Spülflüssigkeit und die mit Feststoffen versetzte Flüssigkeit als Schmutzflüssigkeit bezeichnet.

DE 198 16 733 C2 offenbart eine Bohrhilfe zum Bohren in Fliesen mit einer Markierung zur Kennzeichnung der Bohrmitte, d.h. des Mittelpunktes des künftigen Bohrloches. Die Bohrhilfe wird mittels einer Klebeschicht auf dem zu bearbeitenden Untergrund, beispielsweise einer Fliese, befestigt. Die bekannte Bohrhilfe hat den Nachteil, dass keine Zuführeinrichtung für die Kühl- und Spülflüssigkeit und keine Auffangeinrichtung für die Schmutzflüssigkeit vorhanden sind. Die Kühl- und Spülflüssigkeit kann über das Bohrgerät und das Bohrwerkzeug an die Bearbeitungsstelle transportiert werden. Allerdings ist ein spezielles Bohrgerät mit Zuführeinrichtung erforderlich. Die Schmutzflüssigkeit wird nicht aufgefangen, sondern verschmutzt die Umgebung der Bearbeitungsstelle.

DE 20 2007 009 042 U1 offenbart eine Bohrhilfe bestehend aus einer Grundplatte, die mittels eines Haftmittels auf dem zu bearbeitenden Untergrund befestigbar ist, und einer Führungseinrichtung zur Führung eines Bohrwerkzeuges. Die Bohrhilfe weist außerdem einen Eingangsstutzen zur Zuführung der Kühl- und Spülflüssigkeit und einen Ausgangsstutzen zur Abführung der Schmutzflüssigkeit auf. Um zu verhindern, dass die Schmutzflüssigkeit aus dem Ausgangsstutzen austritt und umherspritzt, muss der Ausgangsstutzen der Bohrhilfe mit einer Auffangeinrichtung, beispielsweise in Form eines Nassstaubsaugers, verbunden sein. Dies hat den Nachteil, dass ein hoher apparativer Aufwand erforderlich ist, um die Schmutzflüssigkeit aufzufangen.

Die Aufgabe der vorliegenden Erfindung besteht demgegenüber darin, eine Bohrhilfe der eingangs genannten Art dahingehend weiterzuentwickeln, dass die Schmutzflüssigkeit von der Bohrhilfe aufgefangen wird.

Diese Aufgabe wird bei der eingangs genannten Bohrhilfe erfindungsgemäß durch die Merkmale des unabhängigen Anspruchs 1 gelöst. Vorteilhafte Ausgestaltungen ergeben sich aus den abhängigen Ansprüchen.

Es wird eine Bohrhilfe mit einer Befestigungseinrichtung zur Befestigung der Bohrhilfe an einem zu bearbeitenden Untergrund, einer Führungseinrichtung zur Führung eines Bohrwerkzeuges entlang einer Bohrrichtung und einer Auffangeinrichtung zum Auffangen und Speichern einer Schmutzflüssigkeit vorgeschlagen. Erfindungsgemäß ist das Bohrwerkzeug bei der Führung entlang der Bohrrichtung von der Auffangeinrichtung zumindest teilweise umgeben. Dies hat den Vorteil, dass die Schmutzflüssigkeit bei der Bearbeitung von der Bohrhilfe aufgenommen und gespeichert wird und keine zusätzliche Auffangeinrichtung für die Schmutzflüssigkeit erforderlich ist, so dass der apparative Aufwand reduziert ist.

In einer bevorzugten Ausführung ist die Auffangeinrichtung auf einer dem Bohrwerkzeug zugewandten Innenfläche der Führungseinrichtung angeordnet. Diese Ausführung hat den Vorteil, dass die Schmutzflüssigkeit besonders gut aufgefangen werden kann, da zwischen der Auffangeinrichtung und dem Bohrwerkzeug nur ein geringer Spalt besteht, durch den Schmutzflüssigkeit entweichen kann.

Besonders bevorzugt ist die Auffangeinrichtung in Form eines Zylinders oder eines Kegelstumpfes mit einer zylinderförmigen Bohrung ausgebildet. Durch die Ausbildung der Auffangeinrichtung als Zylinder oder Kegelstumpfabschnitt ist die Auffangeinrichtung leicht austauschbar.

Besonders bevorzugt ist die Auffangeinrichtung austauschbar ausgebildet. Dies hat den Vorteil, dass nur die Auffangeinrichtung erneuert werden muss, wenn das Wasserspeichervermögen der Auffangeinrichtung erschöpft ist, und die Bohrhilfe weiter verwendet werden kann.

In einer alternativen bevorzugten Ausführung ist die Auffangeinrichtung an einer Stirnfläche der Führungseinrichtung angeordnet. Dabei ist die Auffangeinrichtung besonders bevorzugt auf der dem zu bearbeitenden Untergrund abgewandten Seite der Führungseinrichtung angeordnet. Diese Ausführung hat den Vorteil, dass die Führungseinrichtung, die auf der dem zu bearbeitenden Untergrund zugewandten Seite angeordnet ist, eine sichere Führung des Bohrwerkzeuges im Bereich der Bearbeitungsstelle gewährleistet.

In einer weiteren alternativen bevorzugten Ausführung sind die Führungseinrichtung und die Auffangeinrichtung in einen gemeinsamen Zylinderkörper integriert. Der Zylinderkörper ist aus einem Material, dem ein wasserspeicherndes Material beigemischt ist, oder aus einem wasserspeichernden Material hergestellt.

Bevorzugt ist die Auffangeinrichtung aus Fliessstoff, Kordel, Schwamm oder einem Material, das Polymerisate oder Polyacrylate enthält, ausgebildet. Diese Materialien stellen sicher, dass die Schmutzflüssigkeit von der Auffangeinrichtung aufgefangen und gespeichert wird. Die Verwendung von Polymerisaten und Polyacrylaten hat den Vorteil, dass diese eine hohe hygroskopische Eigenschaft mit einem hohen Wasserspeichervermögen aufweisen.

Bevorzugt ist die Führungseinrichtung aus Metall, Kunststoff oder einem Hartgummi ausgebildet. Diese Materialien stellen eine sichere Führung des Bohrwerkzeuges während der Bearbeitung sicher und unterliegen einem geringen Verschleiß durch das Bohrwerkzeug.

In einer weiteren bevorzugten Ausführung ist die Befestigungseinrichtung an dem, dem Untergrund zugewandten Ende in die Führungseinrichtung integriert.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a,b: eine erste Ausführungsform einer erfindungsgemäßen Bohrhilfe mit einer Füh- rungseinrichtung und einer als innere Beschichtung ausgebildeten Auffangein- richtung für eine Schmutzflüssigkeit in einer perspektivischen Darstellung (Fig. 1a) und einer Schnittansicht (Fig. 1 b);
- Fig. 2: eine zweite Ausführungsform einer erfindungsgemäßen Bohrhilfe mit einer an einer Stirnfläche der Führungseinrichtung angeordneten Auffangeinrichtung in einer Schnittansicht;
- Fig. 3: eine dritte Ausführungsform einer erfindungsgemäßen Bohrhilfe mit einer in die Führungseinrichtung und einer Auffangeinrichtung für die Schmutzflüssig- keit, die als gemeinsamer Zylinderkörper ausgebildet sind, in einer Schnittan- sicht; und
- Fig. 4: eine vierte Ausführungsform einer erfindungsgemäßen Bohrhilfe mit einer Führungseinrichtung und einer austauschbaren Auffangeinrichtung für die Schmutzflüssigkeit in einer Schnittansicht.

Gleiche oder funktionsgleiche Elemente werden durch gleiche Bezugszeichen in den Figuren indiziert, soweit nicht anders angegeben.

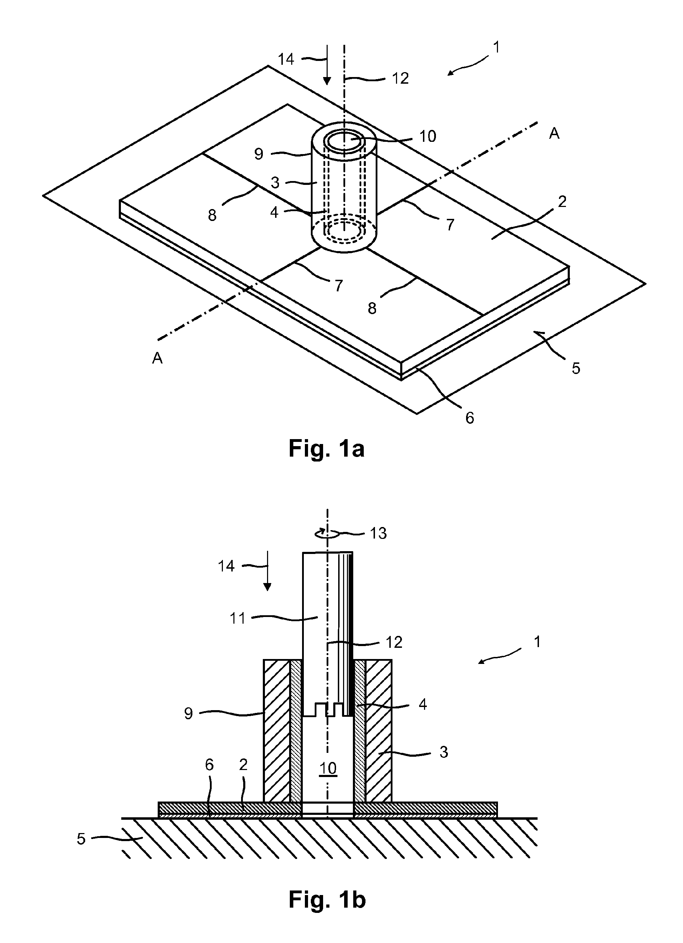

**Fign. 1a, b** zeigen eine erste Ausführungsform einer erfindungsgemäßen Bohrhilfe **1** in einer perspektivischen Darstellung (Fig. 1a) und einer Schnittansicht entlang der Linie A-A (Fig. 1 b).

Die Bohrhilfe 1 besteht aus einer Befestigungseinrichtung in Form einer Grundplatte **2,** einer Führungseinrichtung **3** und einer Auffangeinrichtung **4.** Die Grundplatte 2 weist auf einer einem zu bearbeitenden Untergrund **5** zugewandten Seite ein Haftmittel **6** auf. Die Bohrhilfe 1 ist mittels des Haftmittels 6 auf dem zu bearbeitenden Untergrund 5 auf lösbare Weise befestigbar. Das Haftmittel 6 ist beispielsweise als doppelseitiges Klebeband oder als lösbare Klebeschicht ausgebildet.

Auf der dem Untergrund 5 abgewandten Seite der Grundplatte 2 befinden sich senkrecht angeordnete Hilfslinien **7, 8,** die sich in einem Kreuzungspunkt schneiden. Der Kreuzungspunkt entspricht der Bohrmitte, d.h. dem Mittelpunkt des künftigen Bohrloches. Alternativ kann die Bohrmitte über Erhebungen oder Vertiefungen, die auf der Grundplatte 2 angeordnet sind und beispielsweise linien- oder pfeilförmig ausgebildet sind, angezeigt werden.

Die Bohrhilfe 1 weist einen Zylinderkörper **9** mit einer Bohrung **10** auf, die im Wesentlichen dem Durchmesser eines Bohrwerkzeuges **11** entspricht. Das Bohrwerkzeug 11 wird durch Drehung um eine Drehachse **12** in Richtung eines Pfeils **13** angetrieben und entlang einer Bohrrichtung **14** bewegt.

Der Zylinderkörper 9 ist zweiteilig aus einer äußeren Hülse, die die Führungseinrichtung 3 bildet, und einer inneren Beschichtung, die die Auffangeinrichtung 4 bildet, ausgebildet. Die Führungseinrichtung 3 und die Auffangeinrichtung 4 sind koaxial zur Drehachse 12 angeordnet. Die Führungseinrichtung 3 übernimmt die Aufgabe, das Bohrwerkzeug 10 bei der Bearbeitung sicher zu führen und besteht aus einem Material mit einer hohen Festigkeit, wie beispielsweise Metall, Kunststoff oder Hartgummi. Die Auffangeinrichtung 4 für die Schmutzflüssigkeit ist aus einem wasserspeichernden Material aufgebaut. Als wasserspeichernde Materialien eignen sich beispielsweise Fliessstoff, Kordel, Schwamm oder Materialien, die Polymerisate oder Polyacrylate enthalten. Die Verwendung von Polymerisaten und Polyacrylaten hat den Vorteil, dass diese eine hohe hygroskopische Eigenschaft mit einem hohen Wasserspeichervermögen aufweisen. Je größer das Wasserspeichervermögen der Auffangeinrichtung 4 ist, umso dünner kann die Beschichtung ausgebildet sein bzw. umso mehr Schmutzflüssigkeit kann aufgenommen werden.

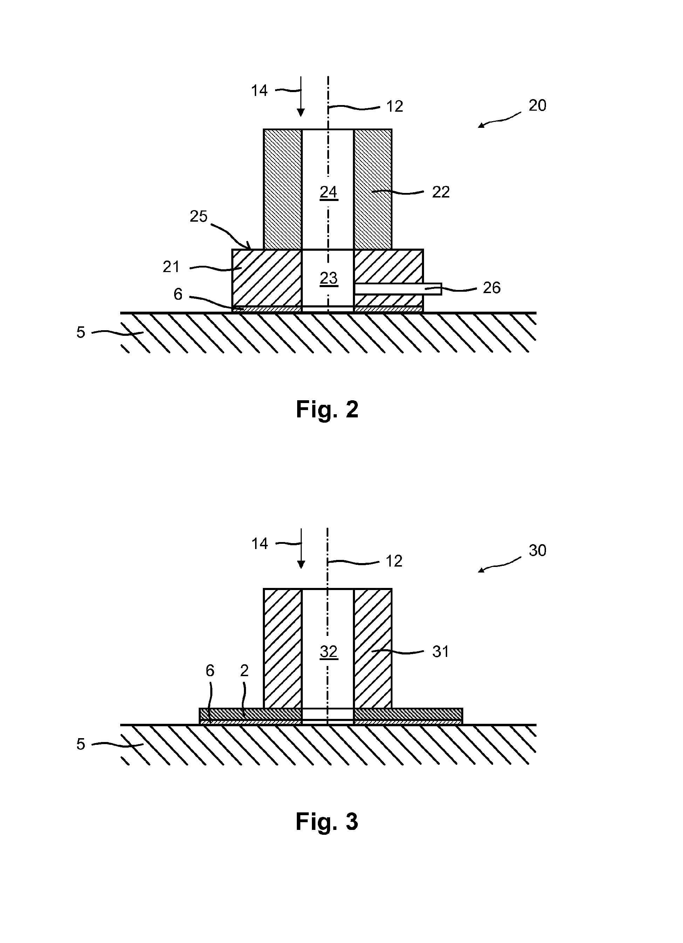

**Fig. 2** zeigt eine zweite Ausführungsform einer erfindungsgemäßen Bohrhilfe **20** mit einer Führungseinrichtung **21** zur Führung des Bohrwerkzeuges 11 während der Bearbeitung und einer Auffangeinrichtung **22** zum Auffangen und Speichern der Schmutzflüssigkeit während der Bearbeitung.

Die Führungseinrichtung 21 ist als Kreiszylinder mit einer zylinderförmigen Bohrung **23** ausgebildet. Die Führungseinrichtung 21 und die Bohrung 23 sind koaxial zur Drehachse 12 angeordnet. Die Befestigungseinrichtung zur Befestigung der Bohrhilfe 20 am zu bearbeitenden Untergrund 5 ist in die Führungseinrichtung 21 integriert. Das Haftmittel 6, mit dem die Bohrhilfe 20 am Untergrund 5 lösbar befestigbar ist, ist auf der dem Untergrund 5 zugewandten Seite der Führungseinrichtung 21 angebracht.

Die Auffangeinrichtung 22 ist ebenfalls als Kreiszylinder mit einer zylinderförmigen Öffnung **24** ausgebildet. Die Auffangeinrichtung 22 und die Öffnung 24 sind koaxial zur Drehachse 12 angeordnet. Die Auffangeinrichtung 22 ist auf der dem Untergrund 5 abgewandten Seite der Führungseinrichtung 21 angeordnet und an einer Stirnfläche **25** der Führungseinrichtung 21 mit der Führungseinrichtung 21 verbunden.

Die Führungseinrichtung 21 besteht aus einem Material, wie beispielsweise Metall, Kunststoff oder Hartgummi, das eine sichere Führung des Bohrwerkzeuges 11 während der Bearbeitung sicherstellt und nur einem geringen Verschleiß durch das Bohrwerkzeug 11 unterliegt. Die Auffangeinrichtung 22 für die Schmutzflüssigkeit ist aus einem wasserspeichernden Material hergestellt. Als wasserspeichernde Materialien eignen sich beispielsweise Fliessstoff, Kordel, Schwamm oder Materialien, die Polymerisate oder Polyacrylate enthalten, sowie sämtliche anderen Materialien mit einem Wasserspeichervermögen.

Bei der in Fig. 2 gezeigten Bohrhilfe 20 sind die Führungseinrichtung 21 und die Auffangeinrichtung 22 in Bohrrichtung 14 in einer Stufenform ausgebildet. Die Höhe und Dicke der Führungseinrichtung 21 und der Auffangeinrichtung 22 sind an die unterschiedlichen Aufgaben angepasst. Alternativ können die Führungseinrichtung 21 und die Auffangeinrichtung 22 in einer bündigen Form ausgestaltet sein.

Die Bohrung 23 der Führungseinrichtung 21 und die Öffnung 24 der Auffangeinrichtung 22 müssen so groß sein, dass das Bohrwerkzeug 11 hindurchpasst. Zur sicheren Führung des Bohrwerkzeuges 11 mittels der Führungseinrichtung 21 ist der Durchmesser der Bohrung 23 geringfügig größer als der Durchmesser des Bohrwerkzeuges 11. Die Auffangeinrichtung 22 dient nur zum Auffangen und Speichern der Schmutzflüssigkeit und nicht zur Führung des Bohrwerkzeuges 11. Der Durchmesser der Öffnung 24 ist so gewählt, dass die Auffangeinrichtung 22 während der Bewegung des Bohrwerkzeuges 11 in Bohrrichtung 14 einem geringen Verschleiß unterliegt und möglichst viel Schmutzflüssigkeit auffangen und speichern kann. Ist der Durchmesser der Öffnung 24 der Auffangeinrichtung 22 möglichst klein, kann die Schmutzflüssigkeit besonders gut aufgefangen werden, da zwischen Bohrwerkzeug 11 und Auffangeinrichtung 22 nur ein geringer Spalt besteht, durch den Schmutzflüssigkeit entweichen könnte.

Die Bohrhilfe 20 weist außerdem eine Zuführleitung **26** für die Kühl- und Spülflüssigkeit auf. Die Zuführleitung 26 durchdringt die Führungseinrichtung 21, führt die Kühl- und Spülflüssigkeit durch die Führungseinrichtung 21 und mündet in die Bohrung 23. Die Kühl- und Spülflüssigkeit dient unter anderem dazu, das Bohrwerkzeug 11 im Bereich der Bearbeitungsstelle zu kühlen. Die Zuführleitung 26 sollte in einem Abstand zur Auffangeinrichtung 22 der Bohrhilfe 20 angeordnet sein, damit die zugeführte Kühl- und Spülflüssigkeit an die Bearbeitungsstelle gelangt und nicht von der Auffangeinrichtung 22 aufgefangen und gespeichert wird.

Alternativ zu der Zuführung der Kühl- und Spülflüssigkeit über die Bohrhilfe kann die Kühl- und Spülflüssigkeit über das Bohrwerkzeug 11 zugeführt werden.

**Fig. 3** zeigt eine dritte Ausführungsform einer erfindungsgemäßen Bohrhilfe **30.** Die Bohrhilfe 30 weist die Grundplatte 2 zur Befestigung der Bohrhilfe 30 am zu bearbeitenden Untergrund 5 und einen auf der Grundplatte 2 angeordneten Zylinderkörper **31** mit einer Bohrung **32** auf. Der Zylinderkörper 31 und die Bohrung 32 sind koaxial zur Drehachse 12 angeordnet.

Die Führungseinrichtung zur Führung des Bohrwerkzeuges 11 während der Bearbeitung ist in den Zylinderkörper 31 integriert. Der Durchmesser der Bohrung 32 entspricht im Wesentlichen dem Durchmesser des Bohrwerkzeuges 11, um eine sichere Führung des Bohrwerkzeuges 11 während der Bearbeitung zu gewährleisten. Der Zylinderkörper 31 ist aus einem Material hergestellt, dem ein wasserspeicherndes Material beigefügt ist, oder der Zylinderkörper 31 ist vollständig aus einem wasserspeichernden Material hergestellt. Die Auffangeinrichtung zum Auffangen und Speichern der Schmutzflüssigkeit ist ebenfalls in den Zylinderkörper 31 integriert. Geeignete Materialien für den Zylinderkörper 31 stellen einerseits eine Führung des Bohrwerkzeuges 11 im Bereich der Bearbeitungsstelle sicher und weisen anderseits ein Wasserspeichervermögen auf, dass zumindest die Schmutzflüssigkeit, die beim Bohren eines Bohrloches entsteht, vom Zylinderkörper 31 aufgenommen werden kann.

Die in den Fign. 1a, b, 2 und 3 gezeigten erfindungsgemäßen Bohrhilfen 1, 20, 30 sind als Einweg- oder Mehrweg-Hilfsmittel ausgebildet und unter anderem für Anwender gedacht, die nur gelegentlich mit Kühl- und Spülflüssigkeit bohren und die keine Auffangeinrichtung in Form eines Nasssaugers zur Verfügung haben.

In einer ersten, einfachen Ausführung ist die Bohrhilfe 1, 20, 30 für eine einmalige Anwendung, d.h. für das Erstellen eines Bohrloches ausgebildet. Nach Erstellen des Bohrloches wird die Bohrhilfe 1, 20, 30 vom Untergrund 5 entfernt und über den Abfall entsorgt.

In einer zweiten, weiterentwickelten Ausführung ist die Bohrhilfe 1, 20, 30 für eine mehrmalige Anwendung ausgebildet. Die Bohrhilfe 1, 20, 30 weist ein lösbares, selbstklebendes Haftmittel 6 auf und die Auffangeinrichtung 4, 22, 31 besitzt ein Wasserspeichervermögen für die Schmutzflüssigkeit mehrerer Bohrlöcher. Nach dem Bohren eines Bohrloches wird die Bohrhilfe 1, 20, 30 vom Untergrund 5 entfernt und sicher aufbewahrt. Die Bohrhilfe 1, 20, 30 ist solange verwendbar, bis das Wasserspeichervermögen der Auffangeinrichtung 4, 22, 31 erschöpft ist.

In einer dritten, weiterentwickelten Ausführung ist die Bohrhilfe 1, 20, 30 für mehrmalige Anwendungen wieder verwendbar ausgebildet. Die Bohrhilfe 1, 20, 30 ist über ein selbstklebendes Haftmittel 6 lösbar befestigbar. Die Auffangeinrichtung 4, 22, 31 gibt die gespeicherte Schmutzflüssigkeit beispielsweise auf Druck frei, so dass zumindest ein Teil der gespeicherten Schmutzflüssigkeit wieder freigegeben wird. Die Bohrhilfe 1, 20, 30 ist solange einsetzbar, bis die Regenerationsfähigkeit des wasserspeichernden Materials der Auffangeinrichtung 4, 22, 31 erschöpft ist.

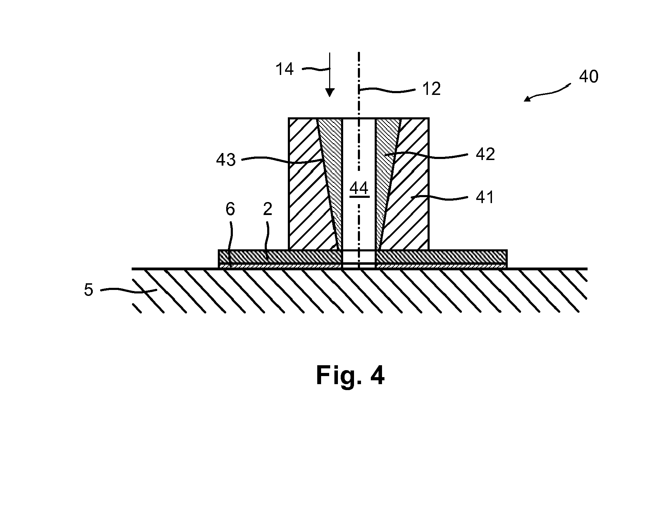

**Fig. 4** zeigt eine vierte Ausführungsform einer erfindungsgemäßen Bohrhilfe **40** mit einer Führungseinrichtung **41** zur Führung des Bohrwerkzeuges 11 während der Bearbeitung und einer Auffangeinrichtung **42** zum Auffangen und Speichern der Schmutzflüssigkeit.

Die Führungseinrichtung 41 ist als Zylinderkörper mit einer Bohrung **43,** die in Form eines Kegelstumpfabschnittes ausgebildet ist und sich in Bohrrichtung 14 verjüngt, ausgebildet. An dem, dem Untergrund 5 zugewandten Ende der Bohrung 43 entspricht der Durchmesser im Wesentlichen dem Durchmesser des Bohrwerkzeuges 11, so dass das Bohrwerkzeug 11 im Bereich der Bearbeitungsstelle sicher geführt ist.

Die Auffangeinrichtung 42 ist wie die Bohrung 43 der Führungseinrichtung 41 ebenfalls in Form eines Kegelstumpfabschnittes ausgebildet und in der Bohrung 43 der Führungseinrichtung 41 angeordnet. Die Auffangeinrichtung 42 weist eine zentrale Öffnung **44** auf, die in der Ausführung der Fig. 4 als Kreiszylinder ausgebildet ist. Der Durchmesser des Kreiszylinders 44 entspricht im Wesentlichen dem Durchmesser des Bohrwerkzeuges 11.

Die Führungseinrichtung 41 ist entweder wie in der Ausführung von Fig. 4 gezeigt auf der Grundplatte 2 angeordnet und mit der Grundplatte 2 fest verbunden oder mittels des Haftmittels 6 direkt am Untergrund 5 befestigbar.

Durch die Ausbildung der Bohrung 43 und der Auffangeinrichtung 42 als Kegelstumpfabschnitte ist die Auffangeinrichtung 42 leicht austauschbar. Ist das Wasserspeichervermögen der Auffangeinrichtung 42 erschöpft, wird die Auffangeinrichtung 42 aus der Bohrung 43 entnommen.

Die in Fig. 4 dargestellte erfindungsgemäße Bohrhilfe 40 ist nicht für den ein- oder mehrmaligen Gebrauch, sondern für den regelmäßigen Einsatz ausgebildet. Lediglich die Auffangeinrichtung 42 muss regelmäßig ausgetauscht oder aufbereitet werden, die übrigen Komponenten der Bohrhilfe 40 sind für den regelmäßigen Einsatz geeignet.

Die Befestigungseinrichtung kann alternativ als Saugnapf ausgebildet sein. Ein Saugnapf erzeugt im Vergleich zu einem doppelseitigen Klebeband oder einer lösbaren Klebeschicht eine höhere Haltekraft am zu bearbeitenden Untergrund 5. Der Saugnapf hat außerdem den Vorteil, dass die Haltekraft am Untergrund 5 auch nach mehrmaligem Befestigen nicht nachlässt, so dass die Bohrhilfe sicher am Untergrund 5 befestigt ist.

## Patentansprüche

1. Bohrhilfe (1; 20; 30; 40) mit einer Befestigungseinrichtung (2) zur Befestigung der Bohrhilfe (1; 20; 30; 40) an einem zu bearbeitenden Untergrund (5), einer Führungseinrichtung (3; 21; 31; 41) zur Führung eines Bohrwerkzeuges (11) entlang einer Bohrrichtung (14) und einer Auffangeinrichtung (4; 22; 31; 42) zum Auffangen und Speichern einer Schmutzflüssigkeit,
**dadurch gekennzeichnet, dass**
das Bohrwerkzeug (11) bei der Führung entlang der Bohrrichtung (14) von der Auffangeinrichtung (4; 22; 31; 42) zumindest teilweise umgeben ist.

2. Bohrhilfe nach Anspruch 1, **dadurch gekennzeichnet, dass** die Auffangeinrichtung (4; 42) auf einer dem Bohrwerkzeug (11) zugewandten Innenfläche der Führungseinrichtung (3; 41) angeordnet ist.

3. Bohrhilfe nach Anspruch 2, **dadurch gekennzeichnet, dass** die Auffangeinrichtung in Form eines Zylinders (4) oder eines Kegelstumpfes (42) mit einer zylinderförmigen Bohrung (10; 24) ausgebildet ist.

4. Bohrhilfe nach einem der Ansprüche 2 bis 3, **dadurch gekennzeichnet, dass** die Auffangeinrichtung (42) austauschbar ausgebildet ist.

5. Bohrhilfe nach Anspruch 1, **dadurch gekennzeichnet, dass** die Auffangeinrichtung (22) an einer Stirnfläche (25) der Führungseinrichtung (21) angeordnet ist.

6. Bohrhilfe nach Anspruch 5, **dadurch gekennzeichnet, dass** die Auffangeinrichtung (22) auf der dem zu bearbeitenden Untergrund (5) abgewandten Seite der Führungseinrichtung (21) angeordnet ist.

7. Bohrhilfe nach Anspruch 1, **dadurch gekennzeichnet, dass** die Führungseinrichtung und die Auffangeinrichtung in einen Zylinderkörper (31) integriert sind.

8. Bohrhilfe nach einem der vorhergehenden Ansprüche, **dadurch gekennzeichnet, dass** die Auffangeinrichtung (4; 22; 31; 42) aus Fliessstoff, Kordel, Schwamm oder einem Material, das Polymerisate oder Polyacrylate enthält, ausgebildet ist.

9. Bohrhilfe nach einem der vorhergehenden Ansprüche, **dadurch gekennzeichnet, dass** die Führungseinrichtung (3; 21; 31; 41) aus Metall, Kunststoff oder einem Hartgummi ausgebildet ist.

10. Bohrhilfe nach einem der vorhergehenden Ansprüche, **dadurch gekennzeichnet, dass** die Befestigungseinrichtung (2) an dem, dem Untergrund (5) zugewandten Ende in die Führungseinrichtung (21) integriert ist.
